# EUROPÄISCHE PATENTSCHRIFT

(11) **EP 3 304 628 B1**
(45) Veröffentlichungstag und Bekanntmachung des Hinweises auf die Patenterteilung: **29.07.2020**
(21) Anmeldenummer: 16724023.3
(22) Anmeldetag: 18.05.2016
(51) Int. Cl.: H01M 8/04089, H01M 8/04119, H01M 8/0432, H01M 8/04791, H01M 8/1018

(54) **REZIRKULATIONSBRENNSTOFFZELLE**
RECIRCULATION FUEL CELL
PILE À COMBUSTIBLE À RECIRCULATION

(30) Priorität: 28.05.2015 DE 102015209804
(43) Veröffentlichungstag der Anmeldung: 11.04.2018
(73) Patentinhaber: thyssenkrupp Marine Systems GmbH, 24143 Kiel (DE); thyssenkrupp AG, 45143 Essen (DE)
(72) Erfinder: KRUMMRICH, Stefan, 24634 Padenstedt (DE); POMMER, Hans, 24360 Barkelsby (DE)
(74) Vertreter: thyssenkrupp Intellectual Property GmbH
(86) Internationale Anmeldenummer: PCT/EP2016/061137
(87) Internationale Veröffentlichungsnummer: WO 2016/188822

(56) Entgegenhaltungen:
- WO-A1-00/63993
- WO-A2-2005/064730
- US-A1- 2007 065 711

## Beschreibung

Die Erfindung betrifft eine Rezirkulationsbrennstoffzellenvorrichtung mit reduzierter Eduktemission.

Aus der EP 2 840 636 A1 ist eine Brennstoffzelle mit Zirkulationsbetrieb bekannt, bei welcher eine Inertgasentsorgung erfolgt.

Aus der US 2007/0 065 711 A1 ist eine Brennstoffzelle mit einem Reaktandenauslass bekannt. Aus der WO 2005/064730 A2 ist eine Brennstoffzelle mit einem Rezirkulationskreis bekannt. Aus der WO 00/63993 A1 ist eine Brennstoffzelleneinheit mit Rezirkulation von nicht umgesetztem Wasserstoff bekannt.

Aus der US 2007/0065711 A1 ist ein Brennstoffzellenmodul mit Rezirkulation bekannt.

Die WO 2007/128018 A2 offenbart ein Brennstoffzellensystem mit einer Rezirkulationseinrichtung. Weiterer relevanter Stand der Technik ist in den Druckschriften WO 2005/064730 A2 und WO 00/63993 A1 offenbart.

Inertgase sind Gase, welche innerhalb der Brennstoffzelle nicht umgesetzt werden, sich inert verhalten. Die wichtigsten Inertgase sind Stickstoff (N₂) und Argon (Ar). Weitere sind beispielsweise Helium (He) oder Neon (Ne). Weitere Inertgase können die schwereren Edelgase oder auch nicht reaktive Halogenkohlenwasserstoffe sein.

Es hat sich als nachteilig erwiesen, insbesondere beim Betrieb von Brennstoffzellen in geschlossenen Räumen und ganz besonders innerhalb eines Unterseeboots, Edukte und insbesondere Wasserstoff an die Umgebung abzugeben. In geschlossenen Räumen kann sowohl die Abgabe von Wasserstoff (Knallgasbildung) als auch von Sauerstoff (Erreichen toxischer Konzentrationen) kritisch sein. Des Weiteren kann sich die Brandgefahr erhöhen.

Aufgabe der Erfindung ist es, das mit den Edukten eingetragene Inertgas aus der Brennstoffzelle auszuführen und dabei die Emission von Edukten, insbesondere von Wasserstoff zu minimieren. Gelöst wird diese Aufgabe durch eine Rezirkulationsbrennstoffzellenvorrichtung mit den in Anspruch 1 angegebenen Merkmalen, dem Verfahren zum Betreiben einer Rezirkulationsbrennstoffzelle mit den in Anspruch 5 angegebenen Merkmalen, einer Verwendung mit den in Anspruch 9 angegebenen Merkmalen sowie der Durchführung des Verfahrens mit den in Anspruch 11 angegebenen Merkmalen. Vorteilhafte Weiterbildungen ergeben sich aus den Unteransprüchen, der nachfolgenden Beschreibung sowie der Zeichnung. Die erfindungsgemäße Rezirkulationsbrennstoffzellenvorrichtung weist wenigstens eine Brennstoffzelle, einen ersten Einlass für Sauerstoff, einen zweiten Einlass für Wasserstoff und einen ersten Wasserabscheider auf. Die Brennstoffzelle weist eine Eingangsseite und eine Ausgangsseite sowie eine Anodenseite und eine Kathodenseite auf. Auf der Eingangsseite werden die Edukte (Sauerstoff und Wasserstoff) der Brennstoffzelle zugeführt, auf der Ausgangseite wird das Produkt (Wasser) abgeführt. Auf der Anodenseite erfolgt die Oxidation von Wasserstoff (H₂) zu Protonen (H⁺), auf der Kathodenseite die Reduktion von Sauerstoff (O₂) zu Oxid (O²⁻), wobei durch Leitung der Protonen durch die Membran Wasser (H₂O) entsteht. Der erste Einlass für Sauerstoff ist mit der Eingangsseite der Kathodenseite der Brennstoffzelle verbunden und der zweite Einlass für Wasserstoff ist mit der Eingangsseite der Anodenseite der Brennstoffzelle verbunden. Die Vorrichtung weist eine kathodenseitige Verbindung auf, wobei die kathodenseitige Verbindung eine Verbindung zwischen der Ausgangsseite der Kathodenseite der Brennstoffzelle und der Eingangsseite der Kathodenseite der Brennstoffzelle ist. Die Vorrichtung weist weiter eine anodenseitige Verbindung auf, wobei die anodenseitige Verbindung eine Verbindung zwischen der Ausgangsseite der Anodenseite der Brennstoffzelle und der Eingangsseite der Anodenseite der Brennstoffzelle ist. Die kathodenseitige Verbindung dient zur Rezirkulation des in der Brennstoffzelle nicht umgesetzten Sauerstoffs, die anodenseitige Verbindung zur Rezirkulation des in der Brennstoffzelle nicht umgesetzten Wasserstoffs. In der kathodenseitigen Verbindung ist der erste Wasserabscheider angeordnet. Der Wasserabscheider dient zur Abscheidung des in der Brennstoffzelle entstehenden Wassers und entfernt dieses aus dem Kreislauf. Die Vorrichtung weist an der Ausgangsseite der Kathodenseite der Brennstoffzelle ein Gasablassventil zur kontinuierlichen Abgabe von Prozessgasen auf. Über das Gasablassventil kann ein Teil des an der Ausgangsseite der Kathodenseite der Brennstoffzelle austretenden Kathodengasstroms abgelassen und so aus dem Kreislauf entfernt werden. Über diesen Ablass ist es möglich, die mit dem Sauerstoff eingebrachten Inertgase, welche als Verunreinigung im Sauerstoff enthalten sind, aus dem Kreislauf zu entfernen und so eine Verschlechterung des Wirkungsgrads der Brennstoffzelle aufgrund der Abnahme des Sauerstoff-Partialdruckes zu vermeiden. Hierbei kann die Konzentration an Inertgas im Kathodengasstroms durch die Menge des über das Gasablassventil abgegebenen Anteils gezielt eingestellt werden. Durch die kontinuierliche Abgabe ist eine gezielte Einstellung der abgegebenen Sauerstoffmenge möglich. Ebenfalls begünstigt dieses einen stabilen Betriebszustand, selbst bei einer veränderbaren Inertgaskonzentration.

Besonders bevorzugt handelt es sich bei der Brennstoffzelle um eine Polymerelektrolytmembran-Brennstoffzelle (PEM-Brennstoffzelle). Besonders bevorzugt wird ein sulfoniertes Tetrafluorethylen-Polymer, beispielsweise Nafion (DuPont) oder Flemion (Asahi), als Polymerelektrolytmembran verwendet.

Bei der Brennstoffzelle kann es sich um eine einzelne Brennstoffzelle, eine Parallelschaltung mehrerer einzelner Brennstoffzellen oder einen sogenannten Stack, eine Hintereinanderschaltung mehrerer einzelner, getrennter Brennstoffzellen handeln.

Optional kann die Rezirkulationsbrennstoffzellenvorrichtung einen zweiten Wasserabscheider aufweisen, wobei der zweite Wasserabscheider in der anodenseitigen Verbindung angeordnet ist. Insbesondere bei Verwendung einer PEM-Brennstoffzelle ist es vorteilhaft, die Edukte mit Wasser anzureichern, um eine Verlängerung der Lebensdauer der Membran zu erreichen. Weiter besteht die Möglichkeit der Diffusion von Wasser durch bestimmte Membranen. Um die Wassermenge weiter zu verringern, kann im Anodengasstrom vorzugsweise daher der zweite Wasserabscheider vorgesehen sein.

In einer weiteren Ausführungsform der Erfindung ist die Vorrichtung zur vollständigen Rezirkulierung des an der Ausgangsseite der Anodenseite der Brennstoffzelle austretenden Anodengases ausgebildet. Durch die vollständige Rezirkulierung des an der Ausgangsseite der Anodenseite der Brennstoffzelle austretenden Anodengases kann eine Wasserstoffemission vermieden werden. Dadurch kann auf eine der Rezirkulationsbrennstoffzellenvorrichtung nachgelagerte Wasserstoffoxidationsvorrichtung verzichtet werden. Zusätzlich wird der Wasserstoff vollständig umgesetzt, wodurch Verluste vermieden werden können. Da die Speicherung von Wasserstoff sehr aufwändig ist, ist die vollständige Nutzung und Umsetzung des gespeicherten Wasserstoffs besonders vorteilhaft.

In einer weiteren Ausführungsform der Erfindung ist das Gasablassventil auf der Kathodenseite ein Drosselventil. Die Verwendung eines Drosselventils ermöglicht es, einen vergleichsweise kleinen Anteil des Kathodengasstroms abzutrennen und an die Umgebungsluft abzugeben. Hierdurch ist eine vergleichsweise einfache und nicht aktiv geregelte Abgabe des Inertgases an die Umgebungsluft möglich.

In einer weiteren Ausführungsform der Erfindung ist das Gasablassventil zur Einstellung der Inertkonzentration regelbar. Über eine Veränderung des Gasablasses kann die Inertkonzentration gezielt und sicher eingestellt werden. Wird der Gasablass reduziert, erhöht sich die Inertgaskonzentration in der Rezirkulationsbrennstoffzellenvorrichtung. Bei einer erhöhten Inertkonzentration wird weniger Sauerstoff an die Umgebung abgegeben. Bei einer Erhöhung des Gasablass kehrt sich dieser Effekt um. Somit kann die abgegebene Sauerstoffmenge an den Verbrauch von Sauerstoff in der Umgebung direkt angepasst werden.

Erfindungsgemäß weist die Vorrichtung einen ersten Sauerstoffsensor auf, wobei der erste Sauerstoffsensor die Sauerstoffkonzentration der Umgebungsluft detektiert. Steigt die Sauerstoffkonzentration in der Umgebungsluft über einen kritischen Grenzwert an, so kann die über das Gasablassventil abgegebene Menge des Kathodengasstroms reduziert werden. Hierdurch erhöht sich zwar die Konzentration an Inertgas in der Brennstoffzelle und der Wirkungsgrad der Brennstoffzelle reduziert sich. Jedoch wird dadurch auch bewirkt, dass nach Einstellung eines neuen Gleichgewichts bei gleicher Abgabe von Inertgas die Abgabe von Sauerstoff sich durch die geringere Konzentration von Sauerstoff im Kathodengasstrom reduziert und so die Sauerstoffkonzentration in der Umgebungsluft unterhalb eines Schwellenwerts von 15% bis 25%, besonders bevorzugt unterhalb von 21%, ganz besonders bevorzugt unter einem für Menschen gefährlichem Schwellenwert gehalten werden kann.

Erfindungsgemäß ist das Gasablassventil zur Einstellung der Inertkonzentration durch die durch den ersten Sauerstoffsensor detektierte Sauerstoffkonzentration der Umgebungsluft regelbar. Steigt zum Beispiel die Sauerstoffkonzentration in der Umgebung, wird der Gasablass reduziert, die Inertkonzentration steigt in der Rezirkulationsbrennstoffzellenvorrichtung. Dadurch wird weniger Sauerstoff durch den Gasablass abgegeben. Sinkt die Sauerstoffkonzentration in der Umgebung, kann der Gasablass erhöht werden, die Inertkonzentration sinkt in der Rezirkulationsbrennstoffzellenvorrichtung. Dadurch wird mehr Sauerstoff durch den Gasablass abgegeben.

In einer weiteren Ausführungsform der Erfindung weist die Vorrichtung einen zweiten Sauerstoffsensor auf, wobei der zweite Sauerstoffsensor die Sauerstoffkonzentration an der Ausgangsseite der Kathodenseite der Brennstoffzelle detektiert. Die Verwendung des zweiten Sauerstoffsensors ist vorteilhaft, um die Rezirkulationsbrennstoffzellenvorrichtung mit einer optimalen Inertgaskonzentration zu betreiben. Hierbei ergibt sich das Optimum aus einer möglichst geringen Inertgaskonzentration für den Wirkungsgrad, einer möglichst hohen Inertgaskonzentration für die Minimierung der Sauerstoffemission und einer möglich konstanten Inertgaskonzentration für die Optimierung der Lebensdauer der Brennstoffzelle und eine konstante Leistungsabgabe der Brennstoffzelle. Mit Hilfe des zweitens Sauerstoffsensors kann die Sauerstoffkonzentration im Kathodengasstrom gezielt eingestellt werden, wobei sich eine Konzentration von 40 bis 70 mol-%, bevorzugt von 45 bis 60 mol-%, als optimal erwiesen hat.

In einer weiteren Ausführungsform der Erfindung weist die Vorrichtung einen ersten Befeuchter auf, wobei der erste Befeuchter mit dem ersten Einlass für Sauerstoff verbunden ist.

In einer weiteren Ausführungsform der Erfindung weist die Vorrichtung einen zweiten Befeuchter auf, wobei der zweite Befeuchter mit dem zweiten Einlass für Wasserstoff verbunden ist.

Die Eduktgase werden üblicherweise praktisch trocken eingesetzt, also mit einem Feuchtegehalt (relative Feuchte) von praktisch 0 %. Übliche Speicherformen wie flüssiger Sauerstoff, Wasserstoff aus einem Metallhydridspeicher oder auch Wasserstoff oder Sauerstoff aus einem Druckgastank weisen praktisch durch die Art der Lagerung keine Feuchte auf. Die Membran der Brennstoffzelle weist jedoch beim Betrieb mit trockenen Edukten eine verkürzte Lebensdauer auf. Daher ist es vorteilhaft, die Edukte zu befeuchten, besonders bevorzugt den Wassergehalt praktisch zu sättigen, also einen Feuchtegehalt (relative Feuchte) von 80 bis 100 %, besonders bevorzugt von 90 bis 100 % einzustellen.

In einer weiteren Ausführungsform der Erfindung weist die Vorrichtung einen Vorratsbehälter für flüssigen Sauerstoff auf. Flüssiger Sauerstoff hat sich als besonders effizient erwiesen. Bevorzugt wird der gasförmige Sauerstoff mittels eines Verdampfers und eines Überhitzers aus dem flüssigen Sauerstoff gewonnen.

In einer weiteren Ausführungsform der Erfindung weist die Vorrichtung einen Metallhydridspeicher für Wasserstoff auf. Wasserstoff, welcher aus einem Metallhydridspeicher gewonnen wird, weist praktisch keine Inertgase auf. Hierdurch wird der Betrieb der Brennstoffzelle vereinfacht. Außerdem ist der als Metallhydrid gelagerte Wasserstoff im Vergleich zu unter Druck stehendem Wasserstoff oder flüssigem Wasserstoff deutlich einfacher zu handhaben und die Lagerung ergiebiger. Alternativ oder zusätzlich weist die Vorrichtung einen Reformer zur Erzeugung von Reformergas auf. In einem Reformer wird beispielsweise Diesel mit Wasser und/oder Sauerstoff in Wasserstoff und Kohlenmonoxid bzw. Kohlendioxid umgewandelt.

In einer weiteren Ausführungsform der Erfindung weist die die kathodenseitige Verbindung einen kathodenseitige Verdichter und die anodenseitige Verbindung einen anodenseitige Verdichter auf. Die Verdichter dienen der Kompensation der Druckverluste in der Brennstoffzelle. Besonders bevorzugt sind die Verdichter jeweils hinter den Wasserabscheidern angeordnet. Durch diese Anordnung wird ein Kondensieren innerhalb der Verdichter vermieden. Weiter bevorzugt erfolgt eine Absenkung der Temperatur des rezirkulierten Gasstroms innerhalb des Wasserabscheiders von der Temperatur welche der Gasstrom am der Ausgangsseite der Brennstoffzelle aufweist auf die Temperatur, welche der Gasstrom an der Eingangsseite der Brennstoffzelle aufweist. Da bei der Reaktion innerhalb der Brennstoffzelle Wärme entsteht, heizt sich der Gasstrom innerhalb der Brennstoffzelle auf und erzeugt so den Temperaturgradienten. Da die Gase vorzugsweise eine relative Feuchte nahe 100 % aufweisen, würde bei einer Absenkung der Temperatur in der anodenseitigen bzw. kathodenseitigen Verbindung zur Kondensation kommen.

In einer weiteren Ausführungsform der Erfindung weist die Rezirkulationsbrennstoffzellenvorrichtung einen dritten Einlass auf, wobei der dritte Einlass mit der Eingangsseite der Anodenseite der Brennstoffzelle verbunden ist und wobei Inertgas durch den dritten Einlass zugeführt werden kann. Gerade zum Anfahren der Brennstoffzelle ist es vorteilhaft, die gewünschte Inertgaskonzentration durch Zugabe von Inertgas direkt einzustellen. Dieses ist besonders vorteilhaft, da die Dichte des Anodengases sich mit der Zusammensetzung stark ändern kann, beispielsweise von reinem Wasserstoff zu beispielsweise einem Gemisch aus 50 % Wasserstoff und 50 % Argon verzehnfacht sich die Dichte in etwa. Hierdurch werden die fluiden Eigenschaften, zum Beispiel das Verhalten innerhalb eines Verdichters stark beeinflusst. Daher ist die Zugabe von Inertgas beim Anfahren der Brennstoffzelle vorteilhaft.

In einer weiteren Ausführungsform der Erfindung weist die Rezirkulationsbrennstoffzellenvorrichtung einen vierten Einlass auf, wobei der vierte Einlass mit der Eingangsseite der Kathodenseite der Brennstoffzelle verbunden ist und wobei Inertgas durch den vierten Einlass zugeführt werden kann. Auch auf der Kathodenseite ist es vorteilhaft, beim Einfahren der Brennstoffzelle Inertgas zuzugeben. Zwar ändern sich auf der Kathodenseite die Dichte und damit die fluiden Eigenschaften des Kathodengases nicht so stark, jedoch führt ein erhöhter Anteil an Inertgas zu einem veränderten Potential der Kathodenseite der Brennstoffzelle durch den veränderten Partialdruck des Sauerstoffs. Um einen möglichst konstanten Betrieb zu ermöglichen und somit eine maximale Lebensdauer für die Brennstoffzelle zu erreichen, ist die Zugabe von Inertgas auch auf der Kathodenseite vorteilhaft.

In einem weiteren Aspekt betrifft die Erfindung ein Verfahren zum Betreiben einer Rezirkulationsbrennstoffzellenvorrichtung nach einem der Ansprüche 1-4, wobei das Kathodengas rezirkuliert wird und wobei das Anodengas rezirkuliert wird. Ein Teil des Kathodengasstroms wird kontinuierlich an der Ausgangsseite der Kathodenseite der Brennstoffzelle aus der Rezirkulation entfernt und an die Umgebungsluft abgegeben. Der Anodengasstrom wird vollständig rezirkuliert. Durch die kontinuierliche Abgabe ist eine gezielte Einstellung der abgegebenen Sauerstoffmenge möglich. Ebenfalls begünstigt dieses einen stabilen Betriebszustand, selbst bei einer veränderbaren Inertgaskonzentration.

Durch das vollständige Rezirkulieren des Anodengasstroms wird die Abgabe von Wasserstoff an die Umgebung vermieden, was eine Reihe von Vorteilen aufweist. Zum einen wird die Abgabe von potentiell gefährlichem Wasserstoff (Gefahr der Knallgasbildung) vermieden. Zum anderen kann auf gesonderte Vorrichtung zur gezielten Oxidation des an die Umgebungsluft abgegebenen Wasserstoffs verzichtet werden. Und weiter wird dadurch der Wasserstoff vollständig umgesetzt. In einer weiteren Ausführungsform der Erfindung wird die Inertkonzentration durch den Gasablass durch das Gasablassventil geregelt.

In einer weiteren Ausführungsform der Erfindung wird die durch das Gasablassventil abgegebene Sauerstoffmenge derart geregelt, dass Sauerstoffkonzentration in der Umgebungsluft näherungsweise konstant gehalten. Als näherungsweise konstant wird eine Schwankung der Sauerstoffkonzentration um ± 4 mol-%, bevorzugt um ± 2 mol-% verstanden.

In einer weiteren Ausführungsform der Erfindung wird die Abgabe des Teils des Kathodengasstroms derart geregelt, dass durch die Abgabe des Teils des Kathodengasstroms die Sauerstoffkonzentration in der Umgebungsluft einen Wert von 25 mol-%, bevorzugt 23 mol-%, besonders bevorzugt von 21 °mol-% nicht übersteigt. Durch die Überwachung der Sauerstoffkonzentration in der Umgebungsluft und die aktive Regelung der Abgabe des Teils des Kathodengasstroms kann eine Gefährdung in der Umgebung der Rezirkulationsbrennstoffzellenvorrichtung, insbesondere für Menschen, optimal reduziert werden.

In einer weiteren Ausführungsform der Erfindung wird die Menge des mit dem Teil des Kathodengasstroms abgegebenen Sauerstoffs über die Inertgaskonzentration an der Ausgangsseite der Kathodenseite der Brennstoffzelle eingestellt.

In einer weiteren Ausführungsform der Erfindung wird die Inertgaskonzentration an der Ausgangsseite der Kathodenseite der Brennstoffzelle zur Reduktion des mit dem Teil des Kathodengasstroms abgegebenen Sauerstoffs erhöht.

Durch die Reduktion der Abgabe des Teils des Kathodengasstroms wird die Abgabe von Inertgas reduziert, sodass durch den Sauerstoff über dessen Verunreinigung mehr Inertgas in den Kreislauf eingetragen als ausgetragen wird. Hierdurch erhöht sich die Inertgaskonzentration, bis durch die erhöhte Inertgaskonzentration bei der reduzierten Menge des Teils des Kathodengasstroms die gleiche Menge an Inertgas abgegeben wie eingetragen wird. Hierdurch wird der Sauerstoffaustrag reduziert.

Entsprechend kann durch Erhöhen des Teils des Kathodengasstroms die Konzentration an Inertgas erniedrigt und somit die Abgabe von Sauerstoff an die Umgebung erhöht werden.

In einer weiteren Ausführungsform der Erfindung wird die Inertgaskonzentration an der Ausgangsseite der Kathodenseite der Brennstoffzelle auf 40 bis 70 mol-%, bevorzugt auf 45 bis 60 mol-%, besonders bevorzugt auf 45 bis 55 mol-% eingestellt. Dieser Bereich ist, wie zum Beispiel der EP 2 840 636 A1 zu entnehmen, nicht bevorzugt, da es in diesem Bereich schon zu einer Beeinträchtigung der Leistung der Brennstoffzelle kommt. Dennoch hat dieser Bereich sich erfindungsgemäß als vorteilhaft erwiesen, da hierdurch eine konstante Abführung von Inertgas bei einer vergleichsweise geringen Abgabe von Sauerstoff an die Umgebung möglich ist. Bei einem typischen Gehalt von 0,5 % Inertgasanteil bim Sauerstoff (technische Reinheit, 99,5 %) ergibt sich, dass somit ein Anteil von nur 0,5 % des eingesetzten Sauerstoffs an die Umgebungsluft gegeben werden und somit auch für die Energiegewinnung verloren gehen.

In einer weiteren Ausführungsform der Erfindung werden die Inertgaskonzentration an der Ausgangsseite der Kathodenseite der Brennstoffzelle und die Inertgaskonzentration an der Ausgangsseite der Anodenseite der Brennstoffzelle gleich eingestellt. Gleiche Inertgaskonzentrationen sind besonders bevorzugt, da über die Membran, welche die Anodenseite von der Kathodenseite der Brennstoffzelle trennt, insbesondere im Fall einer PEM-Brennstoffzelle, auch Inertgas diffundieren kann. Durch diese Diffusion ist ein Gleichgewicht nur bei gleichen Inertgaskonzentrationen gegeben. Je stärker die Abweichung von Gleichgewicht ist, umso mehr Prozesse laufen innerhalb der Brennstoffzelle ab, um das Gleichgewicht einzustellen. In einer weiteren Ausführungsform der Erfindung wird das rezirkulierte Kathodengas und dass das rezirkulierte Anodengas verdichtet. Durch das Verdichten des rezirkulierenden Gases wird der Druckverlust innerhalb der Brennstoffzelle ausgeglichen. Besonders einfach kann die Verdichtung des rezirkulierten Anodengases erfolgen, wenn dieses einen konstant hohen Inertgasteil, vorzugsweise 40 bis 70 mol-%, bevorzugt auf 45 bis 60 mol-%, besonders bevorzugt auf 45 bis 55 mol-% aufweist, da hierdurch das Anodengas eine vergleichsweise hohe Dichte aufweist, welche technisch einfacher zu verdichten ist.

In einer weiteren Ausführungsform der Erfindung wird die Stoffmenge an Inertgas, welche mit dem Teil des Kathodengasstroms an der Ausgangsseite der Kathodenseite der Brennstoffzelle aus der Rezirkulation entfernt und an die Umgebungsluft abgegeben wird, gleich der Stoffmenge an Inertgas gewählt, welche der Rezirkulationsbrennstoffzellenvorrichtung über Einlass an Sauerstoff zugeführt wird. Dieses entspricht dem stationären Zustand.

In einer weiteren Ausführungsform der Erfindung wird die Konzentration an Inertgas konstant gehalten. Konstant im Sinne dieser Erfindung ist eine Konzentration, wenn diese innerhalb eines Bereichs von ± 3 Vol.-% schwankt.

In einem weiteren Aspekt betrifft die Erfindung ein Unterseeboot mit einer erfindungsgemäßen Rezirkulationsbrennstoffzellenvorrichtung. Die erfindungsgemäße Rezirkulationsbrennstoffzellenvorrichtung ist besonders vorteilhaft für ein Unterseeboot. Durch die geschlossene Umgebung, das begrenzte Volumen an Umgebungsluft und die in unmittelbarer Nähe arbeitenden Personen, welche die Umgebung nicht verlassen können, ist eine Reduktion der Eduktabgabe besonders vorteilhaft. Durch die Vermeidung von Wasserstoffabgabe werden tatsächliche Risiken minimiert. Durch die Reduktion der Sauerstoffabgabe kann auch ein Ansteigen der Konzentration an Sauerstoff, welcher ebenfalls für die Mannschaft gefährlich werden kann, vermieden werden.

In einer weiteren Ausführungsform der Erfindung weist die Rezirkulationsbrennstoffzellenvorrichtung einen elektrischen Anschluss zum Anschluss an ein Gleichstromnetzwerk des Unterseeboots auf.

In einer weiteren Ausführungsform der Erfindung stellt die Rezirkulationsbrennstoffzellenvorrichtung über das Abgasventil Atemgase, insbesondere Sauerstoff, für die Luftversorgung der Besatzung des Unterseeboots zur Verfügung.

In einem weiteren Aspekt betrifft die Erfindung die Durchführung des erfindungsgemäßen Verfahrens auf einem Unterseeboot.

In einer besonders bevorzugten Ausführungsform der Erfindung wird das erfindungsgemäße Verfahren auf einem Unterseeboot derart durchgeführt, dass die durch die Abgabe des Teils des Kathodengasstroms abgegebene Sauerstoffmenge so eingestellt wird, dass diese der Sauerstoffmenge des Verbrauchs an Sauerstoff innerhalb des Unterseeboots entspricht oder unterschreitet.

Es hat sich herausgestellt, dass bei der Durchführung des erfindungsgemäßen Verfahrens auf einem Unterseeboot besonders bevorzugt die Inertgaskonzentration auf 40 bis 70 mol-%, bevorzugt auf 45 bis 60 mol-%, besonders bevorzugt auf 45 bis 55 mol-% eingestellt wird. Es hat sich herausgestellt, dass bei dieser Inertgaskonzentration die durch die Brennstoffzelle abgegebene Energie in etwa der benötigten Energiemenge entspricht und gleichzeitig die abgegebene Sauerstoffmenge etwa der durch die Mannschaft verbrauchten Sauerstoffmenge entspricht. Da Energie- und Sauerstoffbedarf in erster Näherung mit der Boots- und damit Mannschaftsgröße skaliert, ist dieser Wert in grober Näherung unabhängig von der Bootsgröße. Nachfolgend ist die erfindungsgemäße Rezirkulationsbrennstoffzellenvorrichtung anhand eines in der Zeichnung dargestellten Ausführungsbeispiels näher erläutert.

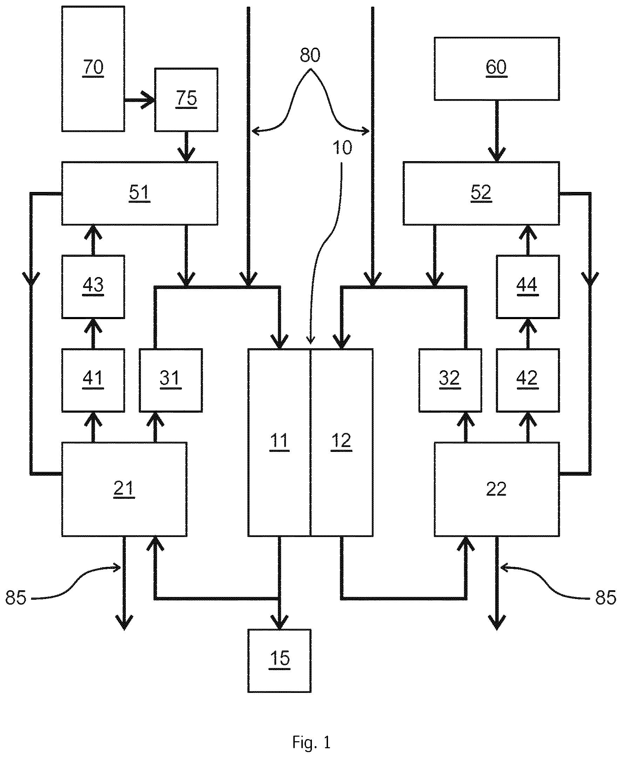

Fig. 1 Schematische Darstellung einer Rezirkulationsbrennstoffzellenvorrichtung

In Fig. 1 ist eine beispielshafte Rezirkulationsbrennstoffzellenvorrichtung schematisch dargestellt. Die Rezirkulationsbrennstoffzellenvorrichtung weist eine Brennstoffzelle 10 mit einer Kathodenseite 11 und einer Anodenseite 12 auf. An der Kathodenseite 11 erfolgt die Reduktion von O₂ zu O²⁻, an der Anodenseite 12 die Oxidation von H₂ zu H⁺. Das aus der Kathodenseite 11 der Brennstoffzelle 10 austretende Kathodengas wird über einen erster Wasserabscheider 21 und einen Verdichter 31 rezirkuliert. Das aus der Anodenseite 12 der Brennstoffzelle 10 austretende Anodengas wird über einen zweiten Wasserabscheider 22 und einen Verdichter 32 rezirkuliert. Über ein Gasablassventil 15 wird ein Teil des Kathodengasstroms an die Umgebungsluft kontinuierlich abgegeben. Aus dem ersten Wasserabscheider 21 und dem zweiten Wasserabscheider 22 kann Wasser über einen Wasserablass 85 aus dem Kreislauf entfernt werden.

Zur Zuführung neuer Edukte verfügt die Rezirkulationsbrennstoffzellenvorrichtung über einen Wasserstofftank 60 und einen Sauerstofftank 70, vorzugsweise für flüssigen Sauerstoff. Der Sauerstoff wird über einen ersten Befeuchter 51 in den Kathodenkreislauf eingebracht, der Wasserstoff über einen zweiten Befeuchter 52 in den Anodenkreislauf. Der erste Befeuchter 51 und der zweite Befeuchter 52 weisen vorzugsweise eine wasserdurchlässige Membran auf, vorzugsweise aus einem sulfonierten Tetrafluorethylen-Polymer, beispielsweise Nafion (DuPont) oder Flemion (Asahi). Der erste Befeuchter 51 wird über einen Verdichter 41 und einen Wärmetauscher 43 mit im ersten Wasserabscheider 21 abgeschiedenem Wasser versorgt. Der zweite Befeuchter 52 wird über einen Verdichter 42 und einen Wärmetauscher 44 mit im zweiten Wasserabscheider 22 abgeschiedenem Wasser versorgt. Selbstverständlich sind auch alle anderen Kombinationen zur Versorgung der Befeuchter durch in den Wasserabscheidern abgeschiedenem Wasser denkbar, insbesondere, dass über den Verdichter 41 und den Wärmetauscher 43 der erste Befeuchter 51 und der zweite Befeuchter 52 mit in dem ersten Wasserabscheider 21 abgeschiedenem Wasser versorgt werden.

Die Wärmetauscher 43, 44 werden vorzugsweise mit Kühlwasser aus der Brennstoffzelle 10 betrieben. Dieses Ausführungsform ist besonders bevorzugt, da das Kühlwasser die Brennstoffzelle 10 mit der höchsten Temperatur verlässt, welche auf der Ausgangsseite der Brennstoffzelle 10 vorliegt. Somit wird das Wasser und somit der mit dem Wasser eingeführte Sauerstoff bzw. Wasserstoff bereits auf die korrekte Temperatur vorgewärmt. Dabei wird das Kühlwasser auf die an der Eingangsseite der Brennstoffzelle 10 herrschende Temperatur angepasst. Hierdurch ist keine aktive Regelung notwendig, das System regelt sich passiv selbst.

Zum Inbetriebnehmen der Brennstoffzelle können über Inertgaszuführungen 80 Inertgas in den Anodengaskreis und den Kathodengaskreis eingebracht werden und so die gewünschten Bedingungen eingestellt werden.

### Bezugszeichen

- 10: Brennstoffzelle
- 11: Kathodenseite
- 12: Anodenseite
- 15: Gasablassventil
- 21: erster Wasserabscheider
- 22: zweiter Wasserabscheider
- 31: Verdichter
- 32: Verdichter
- 41: Verdichter
- 42: Verdichter
- 43: Wärmetauscher
- 44: Wärmetauscher
- 51: erster Befeuchter
- 52: zweiter Befeuchter
- 60: Wasserstofftank
- 70: Sauerstofftank
- 75: Überhitzer
- 80: Inertgaszuführung
- 85: Wasserablass

## Patentansprüche

1. Rezirkulationsbrennstoffzellenvorrichtung mit wenigstens einer Brennstoffzelle (10), einem ersten Einlass für Sauerstoff, einem zweiten Einlass für Wasserstoff, einem ersten Wasserabscheider (21), wobei die Brennstoffzelle (10) eine Eingangsseite und eine Ausgangsseite sowie eine Anodenseite (12) und eine Kathodenseite (11) aufweist, wobei der erste Einlass für Sauerstoff mit der Eingangsseite der Kathodenseite (11) der Brennstoffzelle (10) verbunden ist, wobei der zweite Einlass für Wasserstoff mit der Eingangsseite der Anodenseite (12) der Brennstoffzelle (10) verbunden ist, wobei die Vorrichtung eine kathodenseitige Verbindung aufweist, wobei die kathodenseitige Verbindung eine Verbindung zwischen der Ausgangsseite der Kathodenseite (11) der Brennstoffzelle (10) und der Eingangsseite der Kathodenseite (11) der Brennstoffzelle (10) ist, wobei die Vorrichtung eine anodenseitige Verbindung aufweist, wobei die anodenseitige Verbindung eine Verbindung zwischen der Ausgangsseite der Anodenseite (12) der Brennstoffzelle (10) und der Eingangsseite der Anodenseite (12) der Brennstoffzelle (10) ist, wobei in der kathodenseitigen Verbindung der erste Wasserabscheider (21) angeordnet ist, wobei die Vorrichtung an der Ausgangsseite der Kathodenseite (11) der Brennstoffzelle (10) ein Gasablassventil für Prozessgase (15) zur kontinuierlichen Abgabe von Prozessgasen aufweist, **dadurch gekennzeichnet, dass** die Vorrichtung einen ersten Sauerstoffsensor aufweist, wobei der erste Sauerstoffsensor die Sauerstoffkonzentration der Umgebungsluft detektiert, wobei das Gasablassventil (15) zur Einstellung einer Inertgaskonzentration durch die durch den ersten Sauerstoffsensor detektierte Sauerstoffkonzentration der Umgebungsluft regelbar ist.

2. Rezirkulationsbrennstoffzellenvorrichtung nach Anspruch 1, **dadurch gekennzeichnet, dass** die Vorrichtung zur vollständigen Rezirkulierung des an der Ausgangsseite der Anodenseite (12) der Brennstoffzelle (10) austretenden Anodengases ausgebildet ist.

3. Rezirkulationsbrennstoffzellenvorrichtung nach einem der vorstehenden Ansprüche, **dadurch gekennzeichnet, dass** die Vorrichtung einen zweiten Sauerstoffsensor aufweist, wobei der zweite Sauerstoffsensor die Sauerstoffkonzentration an der Ausgangsseite der Kathodenseite (11) der Brennstoffzelle (10) detektiert.

4. Rezirkulationsbrennstoffzellenvorrichtung nach einem der vorstehenden Ansprüche, **dadurch gekennzeichnet, dass** die Vorrichtung einen ersten Befeuchter (51) aufweist, wobei der erste Befeuchter (51) mit dem ersten Einlass für Sauerstoff verbunden ist und/oder die Vorrichtung einen zweiten Befeuchter (52) aufweist, wobei der zweite Befeuchter (52) mit dem zweiten Einlass für Wasserstoff verbunden ist.

5. Verfahren zum Betreiben einer Rezirkulationsbrennstoffzelle nach einem der Ansprüche 1-4, wobei das Kathodengas rezirkuliert wird und wobei das Anodengas rezirkuliert wird, wobei kontinuierlich ein Teil des Kathodengasstroms an der Ausgangsseite der Kathodenseite (11) der Brennstoffzelle (10) aus der Rezirkulation entfernt und an die Umgebungsluft abgegeben wird, **dadurch gekennzeichnet, dass** der Anodengasstroms vollständig rezirkuliert wird.

6. Verfahren nach Anspruch 5, **dadurch gekennzeichnet, dass** die Inertgaskonzentration durch den Gasablass durch das Gasablassventil (15) geregelt wird wobei die durch den Gasablass durch das Gasablassventil (15) abgegebene Sauerstoffmenge derart geregelt wird, dass Sauerstoffkonzentration in der Umgebungsluft näherungsweise konstant gehalten wird.

7. Verfahren nach einem der Ansprüche 5 bis 6, **dadurch gekennzeichnet, dass** die Inertgaskonzentration an der Ausgangsseite der Kathodenseite (11) der Brennstoffzelle (10) zur Reduktion des mit dem Teil des Kathodengasstroms abgegebenen Sauerstoffs erhöht wird.

8. Verfahren nach einem der Ansprüche 5 bis 7, **dadurch gekennzeichnet, dass** die Stoffmenge an Inertgas, welche mit dem Teil des Kathodengasstroms an der Ausgangsseite der Kathodenseite (11) der Brennstoffzelle (10) aus der Rezirkulation entfernt und an die Umgebungsluft abgegeben wird, gleich der Stoffmenge an Inertgas gewählt wird, welche der Rezirkulationsbrennstoffzellenvorrichtung über Einlass an Sauerstoff zugeführt wird.

9. Verwendung einer Rezirkulationsbrennstoffzellenvorrichtung nach einem der Ansprüche 1 bis 4 auf einem Unterseeboot.

10. Verwendung nach Anspruch 9, **dadurch gekennzeichnet, dass** die Rezirkulationsbrennstoffzellenvorrichtung über das Abgasventil Atemgase für die Luftversorgung der Besatzung des Unterseeboots zur Verfügung stellt.

11. Durchführung des Verfahrens nach einem der Ansprüche 5 bis 8 auf einem einem Unterseeboot.

12. Durchführung des Verfahrens nach Anspruch 11, **dadurch gekennzeichnet, dass** die durch die Abgabe des Teils des Kathodengasstroms abgegebene Sauerstoffmenge so eingestellt wird, dass diese der Sauerstoffmenge des Verbrauchs an Sauerstoff innerhalb des Unterseeboots entspricht oder unterschreitet.

## Claims

1. A recirculation fuel cell device having at least one fuel cell (10), a first inlet for oxygen, a second inlet for hydrogen, and a first water separator (21), wherein the fuel cell (10) comprises an input side and an output side along with an anode side (12) and a cathode side (11), wherein the first inlet for oxygen is connected to the input side of the cathode side (11) of the fuel cell (10), wherein the second inlet for hydrogen is connected to the input side of the anode side (12) of the fuel cell (10), wherein the device comprises a cathode-side connection, wherein the cathode-side connection is a connection between the output side of the cathode side (11) of the fuel cell (10) and the input side of the cathode side (11) of the fuel cell (10), wherein the device comprises an anode-side connection, wherein the anode-side connection is a connection between the output side of the anode side (12) of the fuel cell (10) and the input side of the anode side (12) of the fuel cell (10), wherein the first water separator (21) is arranged in the cathode-side connection, wherein on the output side of the cathode side (11) of the fuel cell (10) the device comprises a gas discharge valve for process gases (15) for the continuous release of process gases, **characterized in that** the device comprises a first oxygen sensor, wherein the first oxygen sensor detects the oxygen concentration in the surrounding air, wherein the gas discharge valve (15) can be regulated to adjust the inert gas concentration on the basis of the oxygen concentration in the surrounding air as detected by the first oxygen sensor.

2. The recirculation fuel cell device as claimed in claim 1, **characterized in that** the device is designed to recirculate in its entirety the anode gas leaving from the output side of the anode side (12) of the fuel cell (10).

3. The recirculation fuel cell device as claimed in one of the preceding claims, **characterized in that** the device comprises a second oxygen sensor, wherein the second oxygen sensor detects the oxygen concentration at the output side of the cathode side (11) of the fuel cell (10).

4. The recirculation fuel cell device as claimed in one of the preceding claims, **characterized in that** the device comprises a first humidifier (51), wherein the first humidifier (51) is connected to the first inlet for oxygen and/or the device comprises a second humidifier (52), wherein the second humidifier (52) is connected to the second inlet for hydrogen.

5. A method for operating a recirculation fuel cell as claimed in one of the preceding claims, wherein the cathode gas is recirculated and wherein the anode gas is circulated, wherein a portion of the cathode gas stream is continuously removed from recirculation at the output side of the cathode side (11) of the fuel cell (10) and released to the surrounding air, **characterized in that** the anode gas stream is recirculated in its entirety.

6. The method as claimed in claim 5, **characterized in that** the inert gas concentration is regulated by the discharge of gas through the gas discharge valve (15), wherein the amount of oxygen released by the discharge of gas through the gas discharge valve (15) is regulated such that the oxygen concentration in the surrounding air is kept approximately constant.

7. The method as claimed in one of claims 5 to 6, **characterized in that** the inert gas concentration at the output side of the cathode side (11) of the fuel cell (10) is increased to reduce the oxygen released with the portion of the cathode gas stream.

8. The method as claimed in one of claims 5 to 7, **characterized in that** the amount of inert gas removed from recirculation with the portion of the cathode gas stream at the output side of the cathode side (11) of the fuel cell (10) and released to the surrounding air is chosen to be equal to the amount of inert gas that is supplied to the recirculation fuel cell device via the oxygen inlet.

9. Use of a recirculation fuel cell device as claimed in one of claims 1 to 4 on a submarine.

10. Use as claimed in claim 9, **characterized in that** the recirculation fuel cell device provides breathing gases for the air supply to the crew of the submarine via the gas discharge valve.

11. Implementation of the method as claimed in one of claims 5 to 8 on board a submarine.

12. Implementation of the method as claimed in claim 11, **characterized in that** the amount of oxygen released by the release of the portion of the cathode gas stream is adjusted such that it corresponds to or is less than the amount of oxygen consumed inside the submarine.

## Revendications

1. Dispositif de pile à combustible à recyclage comprenant au moins une pile à combustible (10), une première admission pour de l'oxygène, une deuxième admission pour de l'hydrogène, un premier séparateur d'eau (21), la pile à combustible (10) possédant un côté d'entrée et un côté de sortie ainsi qu'un côté d'anode (12) et un côté de cathode (11), la première admission pour de l'oxygène étant reliée au côté d'entrée du côté de cathode (11) de la pile à combustible (10), la deuxième admission pour de l'hydrogène étant reliée au côté d'entrée du côté d'anode (12) de la pile à combustible (10), le dispositif possédant une liaison côté cathode, la liaison côté cathode étant une liaison entre le côté de sortie du côté de cathode (11) de la pile à combustible (10) et le côté d'entrée du côté de cathode (11) de la pile à combustible (10), le dispositif possédant une liaison côté anode, la liaison côté anode étant une liaison entre le côté de sortie du côté d'anode (12) de la pile à combustible (10) et le côté d'entrée du côté d'anode (12) de la pile à combustible (10), le premier séparateur d'eau (21) étant disposé dans la liaison côté cathode, le dispositif possédant au niveau du côté de sortie du côté de cathode (11) de la pile à combustible (10) une soupape de décharge des gaz pour les gaz de processus (15) servant au dégagement continu des gaz de processus, **caractérisé en ce que** le dispositif possède un premier détecteur d'oxygène, le premier détecteur d'oxygène détectant la concentration d'oxygène de l'air ambiant, la soupape de décharge des gaz (15) pouvant être régulée en vue de régler une concentration de gaz inerte par la concentration d'oxygène de l'air ambiant détectée par le premier détecteur d'oxygène.

2. Dispositif de pile à combustible à recyclage selon la revendication 1, **caractérisé en ce que** le dispositif est configuré pour un recyclage complet du gaz d'anode qui s'échappe au niveau du côté de sortie du côté d'anode (12) de la pile à combustible (10).

3. Dispositif de pile à combustible à recyclage selon l'une des revendications précédentes, **caractérisé en ce que** le dispositif possède un deuxième détecteur d'oxygène, le deuxième détecteur d'oxygène détectant la concentration d'oxygène au niveau du côté de sortie du côté de cathode (11) de la pile à combustible (10).

4. Dispositif de pile à combustible à recyclage selon l'une des revendications précédentes, **caractérisé en ce que** le dispositif possède un premier humidificateur (51), le premier humidificateur (51) étant relié à la première admission pour de l'oxygène et/ou le dispositif possède un deuxième humidificateur (52), le deuxième humidificateur (52) étant relié à la deuxième admission pour de l'hydrogène.

5. Procédé pour faire fonctionner une pile à combustible à recyclage selon l'une des revendications 1 à 4, le gaz de cathode étant recyclé et le gaz d'anode étant recyclé, une partie du courant de gaz de cathode étant continuellement retirée du recyclage au niveau du côté de sortie du côté de cathode (11) de la pile à combustible (10) et délivrée dans l'air ambiant, **caractérisé en ce que** le courant de gaz d'anode est entièrement remis en circulation.

6. Procédé selon la revendication 5, **caractérisé en ce que** la concentration de gaz inerte est régulée par l'échappement de gaz à travers la soupape de décharge des gaz (15), la quantité d'oxygène délivrée par l'échappement de gaz à travers la soupape de décharge des gaz (15) étant régulée de telle sorte que la concentration d'oxygène dans l'air ambiant est maintenue approximativement constante.

7. Procédé selon l'une des revendications 5 et 6, **caractérisé en ce que** la concentration de gaz inerte au niveau du côté de sortie du côté de cathode (11) de la pile à combustible (10) est augmentée en vue de réduire l'oxygène délivré avec la partie du courant de gaz de cathode.

8. Procédé selon l'une des revendications 5 à 7, **caractérisé en ce que** la quantité molaire de gaz inerte qui est retirée du recyclage avec la partie du courant de gaz de cathode au niveau du côté de sortie du côté de cathode (11) de la pile à combustible (10) et délivrée dans l'air ambiant est choisie égale à la quantité molaire de gaz inerte qui est acheminée au dispositif de pile à combustible à recyclage par le biais de l'admission d'oxygène.

9. Utilisation d'un dispositif de pile à combustible à recyclage selon l'une des revendications 1 à 4 sur un sous-marin.

10. Utilisation selon la revendication 9, **caractérisée en ce que** le dispositif de pile à combustible à recyclage, par le biais de la soupape d'échappement, met à disposition des gaz respiratoires pour l'alimentation en air de l'équipage du sous-marin.

11. Mise en œuvre du procédé selon l'une des revendications 5 à 8 sur un sous-marin.

12. Mise en œuvre du procédé selon la revendication 11, **caractérisée en ce que** la quantité d'oxygène délivrée par la délivrance de la partie du courant de gaz de cathode est réglée de telle sorte que celle-ci correspond ou est inférieure à la quantité d'oxygène de la consommation en oxygène à l'intérieur du sous-marin.
